# EUROPÄISCHE PATENTSCHRIFT

(11) **EP 2 837 090 B1**
(45) Veröffentlichungstag und Bekanntmachung des Hinweises auf die Patenterteilung: **22.08.2018**
(21) Anmeldenummer: 13709376.1
(22) Anmeldetag: 05.03.2013
(51) Int. Cl.: H02P 3/18, H02P 25/14

(54) **VERFAHREN UND VORRICHTUNG ZUM ELEKTRODYNAMISCHEN BREMSEN EINES UNIVERSALMOTORS**
METHOD AND DEVICE FOR THE ELECTRODYNAMIC BRAKING OF A UNIVERSAL MOTOR
PROCÉDÉ ET DISPOSITIF DE FREINAGE ÉLECTRODYNAMIQUE D'UN MOTEUR UNIVERSEL

(30) Priorität: 11.04.2012 DE 102012205876
(43) Veröffentlichungstag der Anmeldung: 18.02.2015
(73) Patentinhaber: Robert Bosch GmbH, 70442 Stuttgart (DE)
(72) Erfinder: WISZNIEWSKI, Jacek, 70771 Leinfelden-Echterdingen (DE); POGORZELSKI, Kamil, 70176 Stuttgart (DE)
(86) Internationale Anmeldenummer: PCT/EP2013/054424
(87) Internationale Veröffentlichungsnummer: WO 2013/152900

(56) Entgegenhaltungen:
- WO-A2-2011/076827

## Beschreibung

Die Erfindung betrifft ein Verfahren und eine Vorrichtung zum elektrodynamischen Bremsen eines Universalmotors.

### Stand der Technik

Ein Verfahren zum elektrodynamischen Bremsen eines Universalmotors ist beispielsweise aus der WO 2011/076827 bekannt. Nachteiliger weise passt sich das dort offenbarte Verfahren nicht an Änderungen der Drehzahl durch äußere Einflüsse oder durch Änderungen einer Solldrehzahl während des Bremsbetriebs an. Dies kann zu schwerwiegenden Fehlfunktionen führen, beispielsweise kann es dabei zu einem unerwünschten Wiederanlaufen des Universalmotors und/oder zu einem erhöhten Bürstenfeuer und damit Verschleiß am Anker des Universalmotors kommen.

### Offenbarung der Erfindung

Es ist daher die Aufgabe der vorliegenden Erfindung, ein verbessertes Verfahren zum elektrodynamischen Bremsen eines Universalmotors bereitzustellen.

Die Aufgabe wird erfindungsgemäß gelöst mit dem Verfahren nach Anspruch 1. Ein Vorteil des erfindungsgemäßen Verfahrens besteht darin, dass durch das Anpassen des Zündwinkels an die tatsächliche Drehzahl ein Bremsvorgang des Universalmotors bedeutend verkürzt sein kann. Durch das erfindungsgemäße Berücksichtigen eines tatsächlichen Drehzahlverlaufs während des gesamten Bremsbetriebs kann eine rasche Adaptierung des Zündverhaltens des zweiten Halbleiterschalters erreicht werden.

Im Ergebnis kann dadurch z.B. ein Verschleiß des Kommutators deutlich reduziert sein. Ferner können im Bremsvorgang vorteilhaft individuelle Betriebsumstände des Universalmotors berücksichtigt werden. Ferner kann dadurch vorteilhaft eine vordefinierte Zuordnung von Solldrehzahlen zu Zündwinkeln leicht adaptiert werden, wodurch auf komfortable Weise eine Anpassung von Bremsverläufen an ideale Bremsverläufe durchgeführt werden kann.

Eine Weiterbildung des Verfahrens sieht vor, dass im Falle, dass die ermittelte Drehzahl ein definiertes Maß von der Solldrehzahl abweicht, auf einen Zündwinkel in der Zuordnung indexübergreifend zugegriffen wird. Vorteilhaft können dadurch auch große, meist von extern verursachte Drehzahländerungen des Universalmotors während des Bremsbetriebs durch entsprechend große Änderungen des Zündwinkels des zweiten Halbleiterschalters berücksichtigt werden. Eine Bevorzugte Weiterbildung des Verfahrens sieht vor, dass die Zuordnung als eine Tabelle ausgebildet ist. Dadurch kann die Zuordnung vorteilhaft auf unterschiedliche technische Arten implementiert werden.

Eine bevorzugte Weiterbildung des Verfahrens sieht vor, dass die Zuordnung eine maximale Belastung des Universalmotors berücksichtigt. Auf diese Art kann eine Extrembelastung des Universalmotors berücksichtigt werden, wodurch geringere Belastungen des Universalmotors als die maximale Belastung auf sichere Art und Weise gehandhabt werden können. Eine Sicherheitsstufe für den Universalmotor ist dadurch vorteilhaft erhöht.

Eine bevorzugte Weiterbildung des Verfahrens sieht vor, dass die maximale Belastung eine maximale Solldrehzahl und ein maximales Trägheitsmoment für den Universalmotor aufweist. Dadurch kann die Belastung des Universalmotors weitestmöglichst im Sinne eines "Worst-Case"-Szenarios ausgereizt werden.

Eine bevorzugte Weiterbildung des Verfahrens sieht vor, dass der Zündwinkel des zweiten Halbleiterschalters zusätzlich mittels einer Regelungseinrichtung an die ermittelte Drehzahl angepasst wird. Dadurch ergibt sich als Vorteil, dass zusätzlich eine Änderung des Zündwinkels nach dem Reglerprinzip durchgeführt werden kann.

Die Erfindung wird im Folgenden mit weiteren Merkmalen und Vorteilen anhand von mehreren Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:
- Fig. 1: eine prinzipielle Darstellung einer elektrodynamischen Bremseinrichtung für einen Universalmotor, mit der das erfindungsgemäße Verfahren ausgeführt werden kann;
- Fig. 2: einen schematischen Zeitverlauf von Kennwerten eines Universalmotors in einem herkömmlichen elektrodynamischen Bremsbetrieb; und
- Fig. 3: einen schematischen Zeiterlauf von Kennwerten eines Universalmotors in einem erfindungsgemäßen elektrodynamischen Bremsbetrieb.

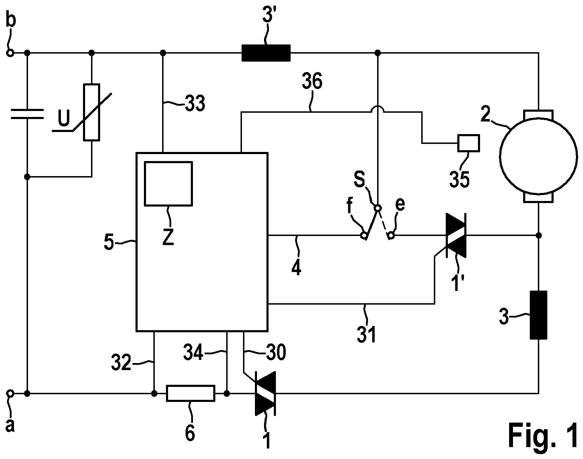

Fig. 1 zeigt ein Prinzipschaltbild einer elektrodynamischen Bremsvorrichtung für einen elektrischen Universalmotor. Die Vorrichtung entspricht im Wesentlichen einer in der WO 2011/076827 offenbarten Anordnung. Die elektrodynamische Bremsvorrichtung weist innerhalb einer elektronischen Steuerungseinrichtung 5, die beispielsweise als eine Mikrocontrollerschaltung ausgebildet sein kann, eine indizierte Zuordnung Z auf. Die Zuordnung Z umfasst dabei mehrere Kombinationen von Zündwinkeln ϕ des zweiten elektronischen Halbleiterschalters 1' mit jeweils entsprechenden Drehzahlen des Universalmotors aus einem zuvor ermittelten, idealen Bremsbetrieb des Universalmotors. Ein Drehzahlsensor 35 ist zu einer permanenten Ermittlung der Drehzahl n des Universalmotors im Bremsbetrieb vorgesehen. Auf weitere Schaltungs- und Funktionsdetails der in Fig. 1 gezeigten Anordnung wird im Folgenden, da sie bereits aus der WO 2011/076827 bekannt sind, nicht eingegangen.

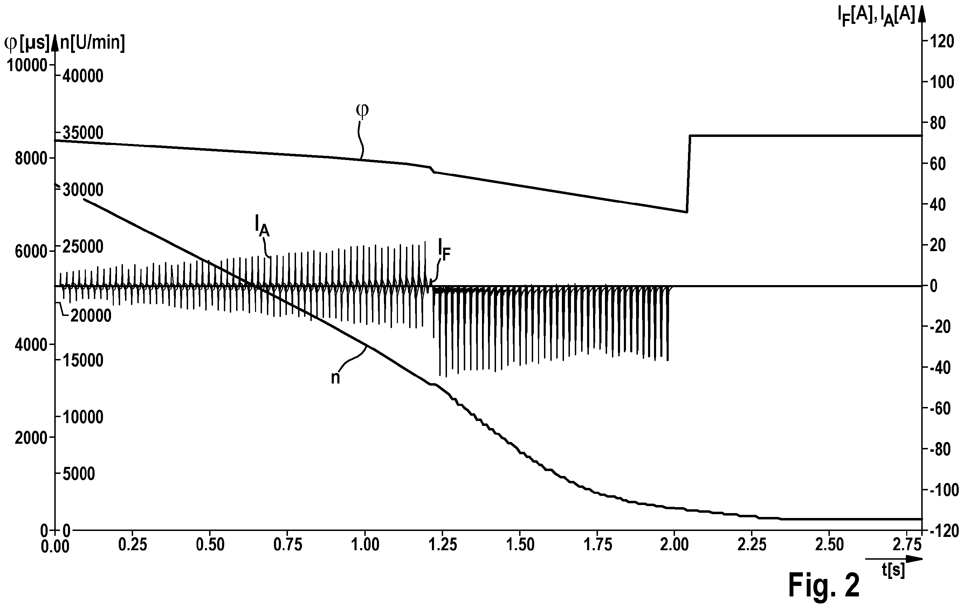

Fig. 2 zeigt ein prinzipielles Zeitdiagramm mit Kennwerten eines Universalmotors während eines herkömmlichen elektrodynamischen Bremsbetriebs, der beispielsweise mit der elektrodynamischen Bremseinrichtung aus Fig. 1 durchgeführt wird. Im Bremsbetrieb des Universalmotors wird in jeder Halbwelle der Netzspannung in einer Phasenanschnittsteuerung der erste Halbleiterschalter 1 gezündet und nach einer kurzen Verzögerung der zweite Halbleiterschalter 1'. Dabei wird in einem Phasenanschnittbetrieb ein Zündwinkel ϕ des zweiten Halbleiterschalters 1' gemäß einem in einer Zuordnung Z hinterlegten, vorgegebenen Zündwinkelverlauf verändert. Voraussetzung für das Zünden des zweiten Halbleiterschalters 1' ist jeweils, dass zuvor der erste Halbleiterschalter 1 gezündet bzw. durchgeschaltet wurde.

Man erkennt, dass eine Drehzahl n des Universalmotors im Bremsbetrieb von ca. 30.000 U/min (Umdrehungen/Minute) auf ca. 1.000 U/min abfällt. Ein zeitlicher Verlauf des Ankerstroms I_{A} bzw. ein Verlauf des Feldstroms I_{F} repräsentieren Stromaufnahmen des Universalmotors im Bremsbetrieb, wobei eine Bremswirkung auf den Universalmotor im Wesentlichen vom Ankerstrom I_{A} generiert wird. Bei ungefähr 1,15 s setzt aufgrund des bereits starken Drehzahlabfalls ein sogenannter "Halbwellenbetrieb" ein, in welchem der zweite Halbleiterschalter 1'nur noch in jeder zweiten Halbwelle der Netzspannung gezündet wird.

Der in Fig. 2 dargestellte herkömmliche Bremsbetrieb des Universalmotors weist als großen Nachteil den Umstand auf, dass der Zündwinkel ϕ des zweiten Halbleiterschalters 1' stets unveränderlich gemäß dem vordefinierten, idealen Zündwinkelverlauf eingestellt wird. Dies ist auch dann der Fall, wenn es im Drehzahlverlauf zu abrupten Abfällen, beispielsweise durch eine äußere mechanische Einwirkung auf ein Werkzeug des Universalmotors kommt. Daraus können nachteilig ein erhöhtes Bürstenfeuer und damit ein erhöhter Verschleiß des Kommutators des Universalmotors resultieren, wodurch eine Betriebsdauer des Universalmotors beträchtlich verkürzt sein kann. Ferner können mittels des starren Zündwinkelverlaufs keinerlei individuelle Betriebsumstände des Universalmotors, wie z.B. sich ändernde Viskositäten von benutzten Schmiermitteln, Fertigungstoleranzen, Belastungen durch Werkzeuge, Temperaturen usw., die allesamt ein Betriebsverhalten des Universalmotors beeinflussen können, berücksichtigt werden.

Erfindungsgemäß ist zur Behebung der obengenannten Nachteile vorgesehen, dass während des Bremsbetriebs des Universalmotors eine Drehzahl n mittels des Drehzahlsensors 35 permanent ermittelt und mit einer in der Zuordnung Z hinterlegten, indizierten idealen Solldrehzahl des Bremsbetriebs des Universalmotors verglichen wird. Die genannte indizierte Zuordnung Z kann beispielsweise als eine Tabelle oder als eine Geraden-Approximation von wenigstens zwei Geraden ausgebildet sein. Es versteht sich von selbst, dass die genannte Zuordnung Z auf jede bekannte Weise ausgebildet sein kann.

Falls bei dem genannten Vergleich der Drehzahlen eine Abweichung der ermittelten Drehzahl n von der zum jeweiligen Zeitpunkt erwarteten Solldrehzahl detektiert wird, wird gemäß dem erfindungsgemäßen Verfahren eine Anpassung des Zündwinkels ϕ des zweiten elektronischen Halbleiterschalters 1' durchgeführt. Auf diese Weise wird der Zündwinkel ϕ des zweiten elektronischen Halbleiterschalters 1' an die tatsächliche Drehzahl n stets bestmöglich angepasst. Dazu kann es bei großen Drehzahlreduktionen also unter Umständen auch erforderlich sein, dass innerhalb der indizierten Zuordnung Z Sprünge über mehrere Indizes hinweg durchgeführt werden, um auf den passenden Zündwinkel ϕ für die Zündung des zweiten Halbleiterschalter 1' zuzugreifen und diesen zu verwenden.

Es wird also erfindungsgemäß angestrebt, in der indizierten Zuordnung Z, die einem idealen, mittels Zündwinkelwerten und Drehzahlwerten definierten Bremsverlauf entspricht, denjenigen Zündwinkel ϕ einzustellen, der sich dadurch auszeichnet, dass er in der indizierten Zuordnung Z derjenigen Solldrehzahl zugeordnet ist, die im Wesentlichen der ermittelten Drehzahl n entspricht.

Bei der Definition des idealen Bremsverlaufs wird ein Mittelweg dahingehend angestrebt, dass einerseits die Bremszeit möglichst kurz gehalten wird, anderseits aber zum Zwecke eines geringen Verschleißes auch der Strom über den Anker 2 möglichst gering gehalten wird. Für den Fall, dass die im Bremsbetrieb des Universalmotors ermittelte Drehzahl im Wesentlichen der Solldrehzahl entspricht, wird - wie in bereits bekannter Weise - eine sequenzielle Abarbeitung der Zündwinkel ϕ innerhalb der Zuordnung Z durchgeführt.

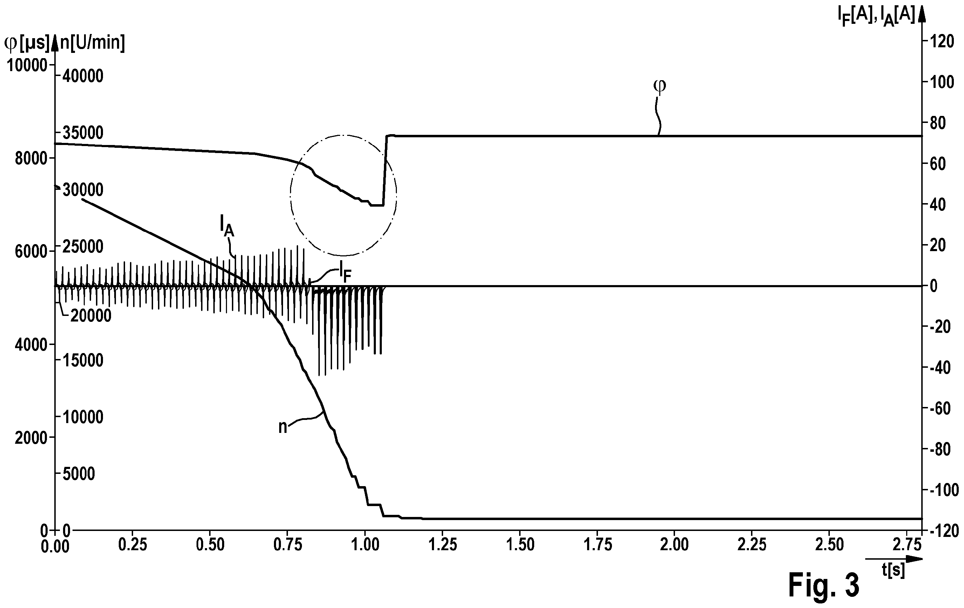

Ein erfindungsgemäßer Verlauf der Kennwerte Zündwinkel, Drehzahl, Ankerstrom und Feldstrom ist im Prinzip in Fig. 3 dargestellt. In Zeitverlauf von Fig. 3 ist die genannte, von extern bewirkte abrupte Reduktion der Drehzahl n zwischen ungefähr 0,5 s und ungefähr 1 s des Bremsbetriebs erkennbar. Der markante Drehzahlabfall kann beispielsweise durch eine externe massive Krafteinwirkung auf den Universalmotor, beispielsweise auf ein vom Universalmotor angetriebenes Werkzeug verursacht sein.

Als Reaktion darauf wird innerhalb der indizierten Zuordnung Z von Zündwinkeln bzw. Stromflusswinkeln ϕ zu Drehzahlen n ein Sprung innerhalb der Zuordnung derart durchgeführt, dass der Zündwinkel ϕ des zweiten elektronischen Halbleiterschalters 1' derart ausgewählt wird, dass die daraus resultierende Drehzahl des Universalmotors der tatsächlichen, ermittelten Drehzahl n im Wesentlichen entspricht. Dies ist in Fig. 3 durch eine grafische Hervorhebung im Zündwinkelverlauf angedeutet. Die aktuelle Drehzahl n wird mittels des Drehzahlsensors 35 in jeder Halbwelle der Netzspannung ermittelt und mit der in der Zuordnung Z hinterlegten idealen Solldrehzahl während des Bremsvorgangs verglichen.

Im Vergleich zur Einstellung der Zündwinkel ϕ des Zeitverlaufs von Fig. 2 ändert der Zündwinkel ϕ erfindungsgemäß also seinen zeitlichen Verlauf, um dadurch in flexibler Weise an die aktuelle Drehzahl n des Universalmotors angepasst zu werden.

Vorteilhaft kann dadurch der Bremsvorgangs deutlich abgekürzt und ein Stromfluss aufgrund von elektromagnetischen Induktionsvorgängen innerhalb des Ankers 2 reduziert werden. Dies kann vorteilhaft einen nachteiligen Einfluss auf den Kommutator deutlich reduzieren.

Als eine weitere Verbesserung des elektrodynamischen Bremsvorgangs ist es vorzugsweise auch möglich, dass innerhalb der elektronischen Steuerungseinrichtung 5 eine Regelungseinrichtung (nicht dargestellt) angeordnet ist, welche den Zündwinkel ϕ des zweiten Halbleiterschalters 1' bei kleineren Abweichungen der ermittelten Drehzahl von der Solldrehzahl nachregelt. Die genannte Regelung weist naturgemäß eine gewisse begrenzte Regelreserve auf und kann daher keine allzu großen Drehzahländerungen wie mittels der zuvor beschriebenen Sprünge innerhalb der indizierten Zuordnung Z verarbeiten. Im Falle eines Abweichens von der idealen Drehzahl wird zum gerade eingestellten Zündwinkel ein der Drehzahldifferenz entsprechender Zündwinkel entweder addiert oder subtrahiert.

Die genannte Zuordnung Z berücksichtigt vorzugsweise eine maximale Belastung des Universalmotors in einem "Worst-Case"-Szenario. Zu diesem Zweck wird bei einem Bestimmungsvorgang der Zuordnung Z beispielsweise der Universalmotor mit einem schweren Werkzeug (zum Beispiel eine Trennscheibe mit maximalem Durchmesser oder ein Hammer mit einem größtmöglichen Meißel) ausgerüstet und auf Maximaldrehzahl gebracht. Danach wird ein idealer Bremsvorgang des Universalmotors ermittelt, wobei der Bremsvorgang möglichst nicht durch äußere Einflüsse beeinflusst werden sollte. Die dabei ermittelten Wertekombinationen für die Zündwinkel ϕ und die Solldrehzahlen werden in geeigneter Form in der Zuordnung Z hinterlegt. Auf diese Weise ist unterstützt, dass der gewünschte Bremsverlauf auch bei geringeren Belastungen des Universalmotors als die Maximalbelastung weitestgehend erreicht werden kann.

Vorzugsweise sind die genannte Zuordnung Z und die Regelungseinrichtung innerhalb der Steuerungseinrichtung 5 als ein Computerprogramm hinterlegt. Es ist auch möglich, die Zuordnung Z auf bekannte Arten alternativ zu implementieren. Auf diese Weise ergibt sich für das erfindungsgemäße Verfahren lediglich ein geringer Aufwand an zusätzlicher Rechenleistung bzw. an Halbleiterspeicher. Vorteilhaft ist für das erfindungsgemäße Verfahren keinerlei Hardware-Mehraufwand erforderlich. Ferner kann das erfindungsgemäße Verfahren auch auf computerlesbaren Datenträgern gespeichert und dadurch auf einfache Weise auf unterschiedlichen Steuerungseinrichtungen 5 implementiert bzw. ausgeführt werden.

Zusammenfassend wird mit der Erfindung ein verbessertes elektrodynamisches Verfahren zum Bremsen eines Universalmotors vorgeschlagen, bei welchem ein Zündwinkelverlauf eines Halbleiterschalters gemäß der tatsächlichen, aktuellen Drehzahl während des Bremsvorgangs eingestellt wird. Dadurch kann vorteilhaft eine deutliche Verkürzung der Bremszeit und eine deutliche Verminderung von Bürstenfeuer am Anker resultieren, was vorteilhaft einen geringeren Verschleiß und damit eine verlängerte Lebensdauer des Universalmotors bedeuten kann.

Im Prinzip ist es vorteilhaft auch möglich, dass das erfindungsgemäße Verfahren bei Drehzahlerhöhungen während des Bremsvorgangs anwendbar ist.

Obwohl die Erfindung anhand eines Universalmotors beschrieben wurde, versteht es sich von selbst, dass die Erfindung für jegliche Typen von allgemeinen Elektromotoren mit Anker/Läufer, welche eine Drehzahlerfassung und eine elektronische Bremse aufweisen, verwendet werden kann.

Ferner versteht es sich von selbst, dass die Fig. 1 gezeigte prinzipielle Anordnung zur Ausführung des erfindungsgemäßen Verfahrens lediglich beispielhaft ist. Als erste und zweite elektronische Halbleiterschalter 1,1' können statt der gezeigten Triacs auch Thyristoren, MOSFETs, IGBTs oder sonstige Leistungshalbleiterschalter in jeweils geeigneter Anzahl verwendet werden.

## Patentansprüche

1. Verfahren zum Bremsen eines Universalmotors für eine elektrodynamische Bremsvorrichtung mit einem ersten und zumindest einem zweiten Halbleiterschalter (1, 1'), aufweisend folgende Schritte während eines Bremsbetriebs:
- permanentes Ermitteln einer Drehzahl (n) des Universalmotors;
- Einstellen von Zündwinkeln (ϕ) des zweiten Halbleiterschalters (1') gemäß einer indizierten Zuordnung (Z), die einem idealen, mittels Zündwinkelwerten und Drehzahlwerten definierten Bremsverlauf entspricht, derart, dass ein Zündwinkel (ϕ) derjenigen Solldrehzahl zugeordnet ist, die im Wesentlichen der ermittelten Drehzahl (n) entspricht, wobei die indizierte Zuordnung (Z) als Geraden-Approximation ausgebildet ist;
- temporäres, periodisches Kurzschließen eines Ankers (2) des Universalmotors mittels des zweiten Halbleiterschalters (1') anhand der eingestellten Zündwinkel (ϕ), wobei der zweite Halbleiterchalter (1') erst nach dem ersten Halbleiterschalter (1) gezündet wird.

2. Verfahren nach Anspruch 1, wobei im Falle, dass die ermittelte Drehzahl (n) ein definiertes Maß von der Solldrehzahl abweicht, auf einen Zündwinkel (ϕ) in der Zuordnung (Z) derart indexübergreifend zugegriffen wird, dass Sprünge über mehrere Indizes hinweg durchgeführt werden.

3. Verfahren nach einem der Ansprüche 1 oder 2, wobei die Zuordnung (Z) eine maximale Belastung des Universalmotors berücksichtigt.

4. Verfahren nach Anspruch 3, wobei die maximale Belastung eine maximale Solldrehzahl und ein maximales Trägheitsmoment für den Universalmotor aufweist.

5. Verfahren nach einem der Ansprüche 1 bis 4, wobei der Zündwinkel (ϕ) des zweiten Halbleiterschalters (1') zusätzlich mittels einer Regelungseinrichtung an die ermittelte Drehzahl (n) angepasst wird.

6. Computerprogrammprodukt mit Programmcodemitteln zur Durchführung des Verfahrens nach einem der Ansprüche 1 bis 5, wenn es auf einer elektronischen Steuerungseinrichtung (5) abläuft oder auf einem computerlesbaren Datenträger gespeichert ist.

## Claims

1. Method for the braking of a universal motor for an electrodynamic braking device with a first and at least a second semiconductor switch (1, 1'), having the following steps during a braking operation:
- continuously ascertaining a rotational speed (n) of the universal motor;
- setting firing angles (ϕ) of the second semiconductor switch (1') according to an indexed mapping (Z) which corresponds to an ideal braking profile defined by means of firing angle values and rotational speed values, such that a firing angle (ϕ) is mapped to that setpoint rotational speed which essentially corresponds to the ascertained rotational speed (n), wherein the indexed mapping (Z) is designed as a straight-line approximation;
- temporarily, periodically short-circuiting an armature (2) of the universal motor by means of the second semiconductor switch (1') on the basis of the set firing angle (ϕ), wherein the second semiconductor switch (1') is triggered only after the first semiconductor switch (1).

2. Method according to Claim 1, wherein in the case that the ascertained rotational speed (n) deviates from the target rotational speed by a defined amount, a firing angle (ϕ) in the mapping (Z) is accessed across indices such that jumps are carried out across multiple indices.

3. Method according to either of Claims 1 and 2, wherein the mapping (Z) takes into account a maximum loading of the universal motor.

4. Method according to Claim 3, wherein the maximum loading has a maximum target rotational speed and a maximum moment of inertia for the universal motor.

5. Method according to one of Claims 1 to 4, wherein the firing angle (ϕ) of the second semiconductor switch (1') is also adapted to the ascertained rotational speed (n) by means of a regulating device.

6. Computer program product having program code means for carrying out the method according to one of Claims 1 to 5, if it runs on an electronic control device (5) or is stored on a computer-readable data carrier.

## Revendications

1. Procédé pour freiner un moteur universel pour un dispositif de freinage électrodynamique pourvu d'un premier et au moins un deuxième commutateur à semiconducteur (1, 1'), comprenant les étapes suivantes pendant un régime de freinage :
- détermination en permanence d'une vitesse de rotation (n) du moteur universel ;
- réglage d'angles d'amorçage (ϕ) du deuxième commutateur à semiconducteur (1') conformément à une attribution (Z) indicée qui correspond à une courbe de freinage idéale définie au moyen de valeurs de l'angle d'amorçage et de valeurs de la vitesse de rotation, de telle sorte qu'un angle d'amorçage (ϕ) est associé à la vitesse de rotation de consigne qui correspond sensiblement à la vitesse de rotation (n) déterminée, l'attribution (Z) indicée étant configurée sous la forme d'une approximation en ligne droite ;
- court-circuit temporaire périodique d'un induit (2) du moteur universel au moyen du deuxième commutateur à semiconducteur (1') à l'aide de l'angle d'amorçage (ϕ) réglé, le deuxième commutateur à semiconducteur (1') n'étant amorcé qu'après le premier commutateur à semiconducteur (1).

2. Procédé selon la revendication 1, selon lequel, dans le cas où la vitesse de rotation (n) déterminée présente une différence définie par rapport à la vitesse de rotation de consigne, un accès est effectué sur la globalité des indices à un angle d'amorçage (ϕ) dans l'attribution (Z) de telle sorte que des sauts sont effectués sur plusieurs indices.

3. Procédé selon l'une des revendications 1 ou 2, selon lequel l'attribution (Z) tient compte d'une charge maximale du moteur universel.

4. Procédé selon la revendication 3, selon lequel la charge maximale présente une vitesse de rotation de consigne maximale et un moment d'inertie maximal pour le moteur universel.

5. Procédé selon l'une des revendications 1 à 4, selon lequel l'angle d'amorçage (ϕ) du deuxième commutateur à semiconducteur (1') est en plus adapté à la vitesse de rotation (n) déterminée au moyen d'un appareil de régulation.

6. Produit de programme informatique comprenant des moyens de code de programme destinés à mettre en oeuvre le procédé selon l'une des revendications 1 à 5 lorsqu'il est exécuté sur un appareil de commande électronique (5) ou enregistré sur un support de données lisible par ordinateur.
